# EUROPEAN PATENT SPECIFICATION

(11) **EP 2 790 456 B1**
(45) Date of publication and mention of the grant of the patent: **21.10.2015**
(21) Application number: 13163128.5
(22) Date of filing: 10.04.2013
(51) Int. Cl.: H04W 76/02

(54) **D2D communication in wireless networks**
D2D-Kommunikation in drahtlosen Netzen
Communication D2D dans des réseaux sans fil

(43) Date of publication of application: 15.10.2014
(73) Proprietor: FUJITSU LIMITED, Kawasaki-shi, Kanagawa 211-8588 (JP)
(72) Inventor: Bucknell, Paul, Brighton, Middlesex BN2 1SP (GB); Tesanovic, Milos, Hayes, Middlesex UB4 8FE (GB); Chebbo, Hind, Uxbridge, Middlesex UB8 3SY (GB)
(74) Representative: Stebbing, Timothy Charles

(56) References cited:
- US-A1- 2011 098 043
- US-A1- 2011 182 280
- US-A1- 2012 184 306

## Description

### Field of the Invention

The present invention relates to wireless communication networks, for example networks compliant with the 3GPP Long Term Evolution (LTE) and 3GPP LTE-A (LTE-Advanced) groups of standards, and more particularly to so-called D2D (Device-to-Device) links in such networks.

### Background of the Invention

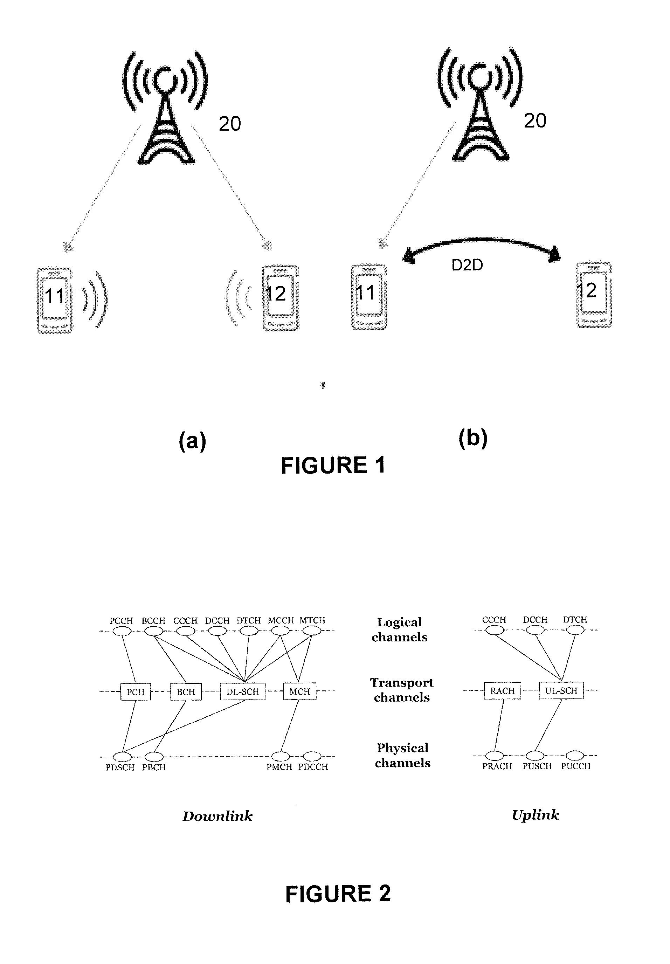

Wireless communication networks are widely known in which, as schematically shown in Figure 1(a), a base station (BS) 20 uses a given radio access technology, RAT, to communicate with user equipments (UEs) 11 and 12, also called terminals, or subscriber or mobile stations, which are within a coverage area (cell) of the BS. The arrows in Figure 1(a) represent a data path between the BS 20 and each of UEs 11 and 12. In practice there will also be a separate control path, not shown here, for signalling in the sense of management and housekeeping messages in the network, as distinct from user data transmitted over the data path for providing services to users. The control path carries, for example, Radio Resource Control (RRC) information for establishing and maintaining connections between the BS and the UEs.

The direction of communication from the base station to the UE is referred to as the downlink (DL), and that from the UE to the base station as the uplink (UL). Resources in such a system have both a time dimension and a frequency dimension, the resources in the time domain being typically organised in units of frames, each having a plurality of "subframes".

3GPP has recently started studying the use of licensed spectrum for direct, peer-to-peer communication between terminals, in which mutual discovery of UEs in proximity to each other, as indicated by the waves emanating from UEs 11 and 12 in Figure 1(a), leads to direct communication between those UEs as shown in Figure 1(b). Discovery and communications between devices that are in proximity is studied under the general umbrella of Proximity Services, and is also colloquially referred to as device-to-device (D2D) communication. The document 3GPP TR 22.803 v0.5.0, "3rd Generation Partnership Project; Technical Specification Group SA; Feasibility Study for Proximity Services (ProSe) (Release 12)", August 2012 describes use cases and potential requirements for operator network controlled discovery and communications between UEs that are in proximity.

In D2D communication, it is not necessary for every UE to maintain a direct data path with the BS 20. In the case of UE 12 in Figure 1 (b) for example, the data path may be via UE 11 with which UE 12 is in D2D communication. Thus, D2D involves UEs acting as relays for other UEs, at least for user data. The result is a mixed network comprising D2D wireless links and cellular wireless links between UEs and base stations. Although the precise manner in which D2D communication is conducted is not essential to the invention to be described, the term generally implies communication using the same RAT as the cellular network and on licensed spectrum available to the network operator. Therefore, one consideration is to avoid interference between devices in D2D mode and conventional transmissions between UEs and BSs, for example by reserving specific resources (time periods and/or frequencies) for D2D communication.

D2D communication does not necessarily require any data path to the base station, although normally the base station will continue to maintain control paths to each of the UEs. Thus, the effort in 3GPP is currently focused on D2D communication between terminals (or UEs) which are "under continuous network control, and are under 3GPP network coverage".

Provisions are being made, however, for relaying of radio-resource management information to devices out of coverage using the D2D link, so that the control path also may utilise D2D, particularly in public safety applications. In this way, D2D can be used to extend coverage of a wireless network to areas outside the coverage area of any BS. Henceforth any use of D2D for a data path (or part of a data path) and/or a control path (or part thereof) will be referred to as a "D2D link". UEs conducting D2D communication will be referred to as being in "D2D Mode". The conventional wireless links between UEs and a BS will be referred to as "the cellular network" where necessary for clarity, or more generally as "the network".

To enable D2D communication, it is necessary for UEs to advertise their capability for D2D and for other UEs to be able to select among available UEs with which to form a D2D link. Before considering this subject in more detail, some background explanation will be given of "channels" for data and signalling which are defined at various levels of abstraction within a 3GPP network, more particularly an LTE network. Figure 2 shows some of the channels defined in LTE at each of a logical level, transport layer level and physical layer level, and the mappings between them.

At the physical layer level, on the downlink, user data as well as System Information Blocks (SIBs) are contained in a transport channel DL-SCH, carried on the Physical Downlink Shared Channel (PDSCH). As can be seen from Fig. 2, PDSCH also carries a paging channel PCH at the transport layer level. There are various control channels on the downlink, which carry signalling for various purposes; in particular the Physical Downlink Control Channel, PDCCH, is used to carry, for example, scheduling information from a base station (called eNB in LTE) to individual UEs being served by that base station.

Each base station broadcasts a number of channels and signals to all UEs within range, whether or not the UE is currently being served by that cell. These include a Physical Broadcast Channel PBCH as shown in Fig. 2. PBCH carries a so-called Master Information Block (MIB), which gives, to any UEs within range of the signal, basic system information enabling the UE to receive and decode the SIBs referred to earlier. Such broadcast information is one kind of Radio Resource Control, RRC, signalling.

Once a UE has decoded the system information, it can follow a Random Access (RA or RACH) procedure to access the network as explained below. A UE may be in "RRC_Connected" mode in which it has a RRC connection with the network, or an "RRC Idle" mode in which the UE is switched on but does not have any established RRC connection. Thus, RACH is used to (amongst other things) move a UE from RRC_Idle to RRC_Connected mode. Once the UE has moved to RRC_Connected mode, it can be individually configured with further, UE-specific RRC signalling. For example it receives from the eNB an identifier (C-RNTI) which it uses to identify itself in its subsequent uplink communications.

On the uplink, user data and also some signalling data is carried on the Physical Uplink Shared Channel (PUSCH), and control channels include a Physical Uplink Control Channel, PUCCH, used to carry signalling from UEs including channel quality indication (CQI) reports and scheduling requests. In this way, the eNB receives measurement reports and other information on UE capabilities from all UEs in RRC_Connected mode.

Of particular relevance to the invention to be described, the Physical Random Access Channel PRACH is conventionally used to carry the Random Access Channel (RACH) for accessing the network if the UE does not have any allocated uplink transmission resource. If a scheduling request (SR) is triggered at the UE, for example by arrival of data for transmission on PUSCH, when no PUSCH resources have been allocated to the UE, the SR is transmitted on a dedicated resource for this purpose. If no such resources have been allocated to the UE, the RA procedure is initiated. The transmission of SR is effectively a request for uplink radio resource on the PUSCH for data transmission.

Thus, RACH is provided to enable UEs to transmit signals in the uplink without having any dedicated resources available, such that more than one terminal can transmit in the same PRACH resources simultaneously. The term "Random Access" (RA) is used because (except in the case of contention-free RACH, described below) the identity of the UE (or UEs) using the resources at any given time is not known in advance by the network. Preambles (sequences of bits which when transmitted, produce a signal with a signature which can be identified by the eNB) are employed by the UEs to allow the eNB to distinguish between different sources of transmission.

Situations where the RACH process is used include:
- Initial access from RRC_IDLE
- RRC connection re-establishment
- Handover
- DL data arrival in RRC_CONNECTED (when non-synchronised)
- UL data arrival in RRC_CONNECTED (when non-synchronised, or no SR resources are available)
- Positioning (based on Timing Advance, TA)

RACH can be used by the UEs in either of contention-based and contention-free modes.
In contention-based RA, UEs select any preamble at random, at the risk of "collision" at the eNB if two or more UEs accidentally select the same preamble. Contention-free RA avoids collision by the eNB informing each UE which preambles may be used.

Below, "RACH" or "RACHing" is also used as a verb to denote a UE conducting at least the initial part of a RACH procedure.

RACHing can be triggered in response to a PDCCH order (e.g. for DL data arrival, or positioning). In Release 8, 9 or 10 of LTE, contention-free RA is only applicable for handover, DL data arrival and positioning.

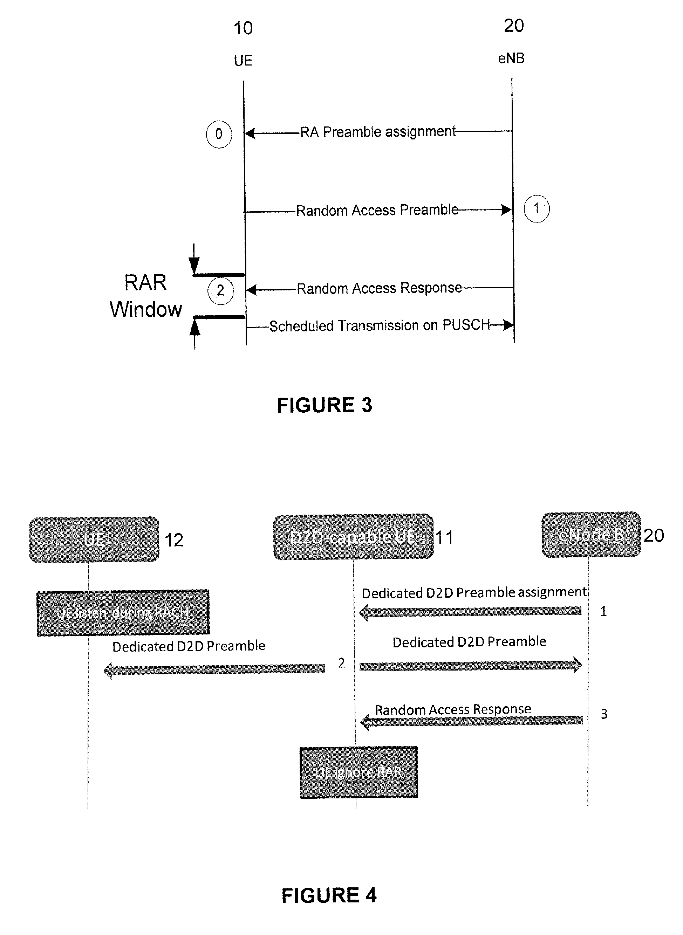

Figure 3 shows the exchange of signals in a conventional RACH procedure, between a UE 10 and an eNB (base station) 20 of an LTE wireless communication system. Referring to Figure 3, the RA procedure typically operates as follows (for contention based access):-
(i) As already mentioned the UE 10 receives the downlink broadcast channel PBCH for the cell of interest (serving cell). This is indicated by (0) in the Figure.
(ii) The network, represented in Figure 3 by eNB 20, indicates cell specific information including the following:
   - resources available for PRACH
   - Random Access Preambles (henceforth, "preambles") available (up to 64)
   - preambles corresponding to small and large message sizes.
(iii) The UE 10 selects a PRACH preamble according to those available for contention based access and the intended message size.
(iv) The UE 10 transmits the PRACH preamble (also called "Message 1", indicated by (1) in the Figure) on the uplink of the serving cell. The eNB 20 receives Message 1 and estimates the transmission timing of the UE.
(v) The UE 10 monitors a specified downlink channel for a response from the network (in other words from the eNB 20). The UE monitors this channel for a specified length of time, the RAR window shown in the Figure. In response to the UE's transmission of Message 1, the UE receives a Random Access Response or RAR ("Message 2" indicated by (2) in Figure 3) from the network. This is described in more detail below.
(vi) In response to receiving Message 2 from the network, the UE 10 makes a scheduled transmission on PUSCH ("Message 3" as indicated by (3) in the Figure) using the UL grant and Timing Advance information contained in Message 2. This transmission is also called a L2/L3 message.
(vii) A contention resolution message may be sent from the eNB 20 in the event that the eNB received the same preamble simultaneously from more than one UE, and more than one of these UEs transmitted Message 3.

If the UE 10 does not receive any response from the eNB, the UE selects a new preamble and sends a new transmission in a RACH subframe after a random back-off time.

For contention-free RA, the procedure is simpler:
(i) The eNB configures the UE with a preamble from those available for contention-free access.
(ii) The UE transmits the preamble (Message 1) on the uplink to the eNB.
(iii) The UE receives the RAR (Message 2) via PDSCH from the network, which contains an UL grant for transmission on PUSCH. The resource to be used for RAR is again signalled on PDCCH.

In both contention-based and contention-free RA procedures, the RAR contains a Temporary Cell Radio Network Temporary Identifier (C-RNTI) which identifies the UE and which is assigned to the UE when it enters RRC_Connected mode. The C-RNTI is used for identifying the UE to the eNB in later UL transmissions.

In the contention-based procedure, the UE transmits this C-RNTI back to the eNB in Message 3 and, if more than one UE does so there will be a collision at the eNB which may then initiate the contention resolution procedure.

In both contention-based and contention-free RA procedures, the RAR contains:
- A Timing Advance command;
- A UL Grant; and
- The Temporary Cell Radio Network Temporary Identifier (C-RNTI).

In order to manage, e.g., scheduling and congestion issues in the downlink, the eNB is given a window of time to send the RAR. This is the RAR window mentioned earlier and shown in Figure 3, and is configurable from two to ten milliseconds (corresponding to two to ten subframes), depending upon the choice of system parameters. The UE is required to monitor the whole RAR window to detect if the eNB has acknowledged its preamble transmission. If no RAR is received within the RAR window then typically the RA preamble is re-transmitted. Further details of the RA procedure in LTE are given in the document 3GPP TS 36.321.

As already mentioned, to enable D2D communication, it is necessary for UEs to advertise their capability for D2D and for other UEs to be able to select among available UEs with which to form a D2D link. There is consequently a need for a mechanism by which D2D capable devices can advertise their availability and capabilities in an efficient manner.

US2011/0098043 discloses a technique for facilitating D2D communication whilst reducing the burden imposed on networks, by not requiring networks to have preliminary knowledge of whether terminals on the network are capable of forming D2D links. Terminals use cognitive radio capabilities to sense other terminals within range and then may send a request to the network to establish a D2D link with another terminal. Thus, D2D user detection is distributed among the terminals and D2D connection establishment is initiated by the terminals.

### Summary of the Invention

According to a first aspect of the present invention, there is provided a method of forming a device-to-device, D2D, wireless communication link between first and second terminals in a network wherein a base station is in wireless communication with at least the first terminal, the method characterised by comprising:
the first terminal determining itself as a D2D-capable terminal which can provide a D2D link with another terminal;
the first terminal broadcasting, during a random access period set by the base station, a random access preamble to advertise its D2D capability;
the base station transmitting, in response to reception of the random access preamble from the first terminal, a random access response including information to assist in establishing the D2D link and
the second terminal detecting the random access preamble and establishing the D2D link with the first terminal.

Preferably, the first terminal has a direct wireless link (wireless cellular link) with the base station. However, it would also be possible for the first terminal to communicate indirectly with the base station, for example by another, existing D2D link.

The information included in the random access response preferably includes at least one of:
a random access preamble for future broadcasting by the first terminal;
an instruction regarding future broadcasting of the random access preamble by the first terminal;
timing information for a transmission from the second terminal; and
resource allocation for a transmission from the second terminal.

The above information may be provided in addition to information conventionally included in RAR, such as an identifier of the first terminal and an uplink grant for the first terminal. Preferably not only the first terminal but also the second terminal detects the random access response.

Preferably the first terminal repeats the broadcasting during at least one later random access period. Thus, if the first terminal does not succeed in establishing a D2D link following an initial transmission of the D2D preamble, it may do so after a subsequent transmission.

The base station may further instruct the first terminal to stop the broadcasting random access preamble, either for reasons relating to the wider network or for reasons relating to the terminal itself.

The base station may inform the first terminal of a periodicity (frequency) for broadcasting the random access preamble. For example in a wireless communication system in which time is divided into frames, the base station could set a periodicity of every n frames where n is an integer.

In one embodiment, the broadcasting of the D2D preamble by the first terminal is performed with a transmission power lower than needed for direct wireless communication from the first terminal to the base station.

In certain embodiments the method further comprises, prior to the broadcasting, the base station notifying the first terminal of a dedicated random access preamble for the purpose of D2D. This allows the base station to set a distinct D2D preamble to each of possibly several D2D-capable terminals within range of the base station, so as to permit contention-free advertisement by those terminals. Thus in these embodiments the D2D advertisement is performed by a procedure based on contention-free RACH, but modified from the conventional procedure.

Other embodiments employ a contention-based approach to the D2D advertisement. In other words the D2D-capable terminal advertises its capability by a procedure based on contention-based RACH, but again modified from the conventional procedure. In this case the method further comprises:
predefining a set of preambles as being D2D preambles;
the broadcasting comprising the first terminal selecting one of the D2D preambles;
the base station responding to the broadcasting with a random access response;
the first terminal transmitting a signal identifying the first terminal;
the second terminal decoding the signal to identify the first terminal, and sending the selected one of the D2D preambles back to the first terminal.

Here, preferably, the D2D preambles include at least one bit identifying the preambles as reserved for use in D2D communication.

The method may be applied to first and second terminals under control of different base stations. That is, the base station may be in wireless communication with the first terminal and the second terminal in wireless communication with a second base station. In this scenario, preferably, the first base station provides the second base station with information including the random access period, and the second base station broadcasts information provided by the first base station so that the random access period can be known by the second terminal. In this way the second terminal, assuming it is within range of the first terminal, can detect the D2D preamble within the random access period.

In any of the above methods, preferably, the determining is performed autonomously by the first terminal. That is, neither any input from a user of the terminal, nor any trigger or additional information from the base station is needed for the terminal to determine itself as D2D-capable. The method of the invention can therefore be seen as a decentralised method in which terminals decide for themselves to set up D2D links.

According to a second aspect of the present invention, there is provided a wireless communication system comprising at least one base station and first and second terminals, at least the first terminal being in wireless communication with the base station, wherein:
the base station includes a controller arranged to set a random access period and a transmitter arranged to broadcast the random access period; and characterised in that
the first terminal includes a controller arranged to determine that the terminal is a D2D-capable terminal which can provide a device-to-device, D2D link with another terminal, and a transmitter arranged to broadcast, during the random access period set by the base station, a random access preamble to advertise its D2D capability; and
the second terminal includes a receiver arranged to detect the random access preamble and a controller responsive to detection of the random access preamble to establish the D2D link with the first terminal; wherein
the base station is further arranged, in response to receiving the random access preamble from the first terminal, to transmit from the transmitter a random access response including information to assist in establishing the D2D link.

This system may have any of the features outlined above with respect to the method. Thus, for example it is not essential for the first terminal to have a direct wireless link with the base station. Preferably the base station is arranged to transmit, in response to the random access preamble from the first terminal, a random access response including information to assist in establishing the D2D link

According to a third aspect of the present invention, there is provided a terminal for use in a wireless communication system comprising the terminal, at least one base station in wireless communication with the terminal, and at least one other terminal, characterised in that the terminal comprises:
a controller arranged to determine that the terminal is a D2D-capable terminal which can provide a device-to-device, D2D link with another terminal, and a transmitter arranged to broadcast, during a random access period set by the base station, a random access preamble to advertise its D2D capability to the at least one other terminal.

The terminal may be adapted to perform any of the method steps listed above and applicable to the terminal.

According to a fourth aspect of the present invention, there is provided a base station for use in a wireless communication system comprising the base station, a first terminal in wireless communication with the base station and capable of device-to-device, D2D, communication, and a second terminal, the base station comprising a controller arranged to set a random access period, a transmitter arranged to broadcast the random access period, and a receiver; and characterised in that:
the controller is arranged to set a random access period for the purpose of allowing the first terminal to advertise its D2D capability by transmission by the first terminal of a D2D preamble;
the transmitter is arranged to broadcast the random access period and optionally, to notify a dedicated D2D preamble to the first terminal; and
the receiver is arranged to receive the D2D preamble transmitted from the first terminal; and
the controller is responsive to the receiver receiving the D2D preamble to cause the transmitter to transmit further information to assist in establishing a D2D link between the first terminal and the second terminal.

The base station may be adapted to perform any of the method steps listed above and applicable to the base station.

A further aspect relates to software for allowing wireless transceiver equipment equipped with a processor to provide the terminal or the base station as defined above. Such software may be recorded on a computer-readable medium, or it may, for example, be in the form of a signal such as a downloadable data signal provided from an Internet website, or it may be in any other form.

According to a further aspect of the present invention there is provided a method for discovering D2D capable devices to enable a D2D link between UEs, said method including: an advertising step to advertise D2D capable UEs to other UEs willing to have a D2D link, said advertising step using either a dedicated signal (dedicated preamble for contention free RACH method) or a coded signal (a preamble with a specific bit for contention based RACH method) sent from D2D capable UEs indicating to other UEs their D2D capabilities for potential D2D link; a behaviour-changing step in which said D2D capable UEs change their behaviour with respect to an eNodeB (after they transmit the said signal), and said UEs change their behaviour to decode the said signal; the method further comprising other signalling to change or alter the frequency of, or stop, the said signal for signalling optimisation purposes and to enable the handshaking between UEs.

In general, and unless there is a clear intention to the contrary, features described with respect to one embodiment of the invention may be applied equally and in any combination to any other embodiment, even if such a combination is not explicitly mentioned or described herein.

As is evident from the foregoing, the present invention involves signal transmissions between base stations and user equipments in a wireless communication system. A base station may take any form suitable for transmitting and receiving such signals. It is envisaged that the base stations will typically take the form proposed for implementation in the 3GPP LTE and 3GPP LTE-A groups of standards, and may therefore be described as an eNodeB (eNB) (which term also embraces Home eNodeB or femto/picocell eNB) as appropriate in different situations. However, subject to the functional requirements of the invention, some or all base stations may take any other form suitable for transmitting and receiving signals from user equipments.

Similarly, in the present invention, each user equipment may take any form suitable for transmitting and receiving signals from base stations. For example, the user equipment may take the form of a subscriber station, or a mobile station (MS), or any other suitable fixed-position or movable form. For the purpose of visualising the invention, it may be convenient to imagine the user equipment as a mobile handset (and in many instances at least some of the user equipments will comprise mobile handsets), however no limitation whatsoever is to be implied from this.

Embodiments of the present invention can provide a novel mechanism for setting up a Device-to-Device (D2D) link using a modified Random Access (RACH) procedure. The conventional RACH procedure is modified to enable a D2D-capable UE to indicate its capability to other UEs, to receive additional (control) information, and to enable the handshake procedure used to establish a D2D link. Additionally, embodiments modify the broadcast system information, to enable D2D link between UEs in the same or different coverage areas, taking into consideration the RRC UE states (RRC_Connected or _Idle). The proposed modifications to the broadcast system information include: 1) an indication of D2D link opportunities with other UEs under different coverage area to that of the D2D capable UE, and 2) RACH parameters in the coverage area of the D2D capable UE, to indicate the listening period for the D2D link. Specification changes for both UE and eNodeB behaviours are envisaged to adapt to the proposed RACH behaviours.

The main benefit is an enhanced RACH procedure that will result in lower control signalling overhead for the required procedure that can enable a D2D communication link between devices. Additionally the invention enables an efficient establishment of a D2D link between devices in same or different coverage areas through the modification of broadcast system information.

### Brief Description of the Drawings

Reference is made, by way of example only, to the accompanying drawings in which:
Figure 1(a) schematically illustrates conventional wireless cellular communication and Figure 1(b) illustrates D2D communication;
Figure 2 shows the mapping between logical channels, transport channels and physical channels in LTE;
Figure 3 shows a conventional RA procedure in an LTE system;
Figure 4 outlines the sequence of signalling according to a first embodiment of the present invention;
Figure 5 outlines the sequence of signalling according to a second embodiment of the present invention;
Figure 6 outlines the sequence of signalling according to a third embodiment of the present invention;

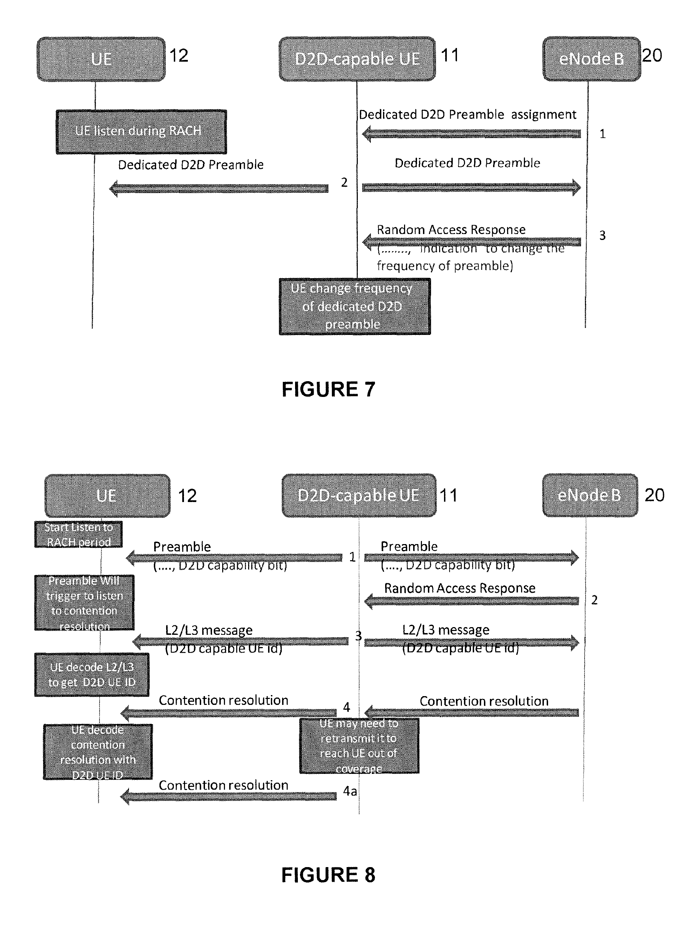

Figure 7 outlines the sequence of signalling according to a fourth embodiment of the present invention;
Figure 8 outlines the sequence of signalling according to a fifth embodiment of the present invention;
Figure 9 outlines the sequence of signalling according to a sixth embodiment of the present invention;
Figure 10 is a block diagram illustrating an example of a terminal to which the invention may be applied; and
Figure 11 is a block diagram illustrating an example of a base station to which the invention may be applied.

### Detailed Description

The RACH procedure as defined in the introduction involves communications between a UE and an eNB. Embodiments of the present invention concern the details of RACH procedure modifications for the purpose of enabling (advertising, establishing, and modifying parameters of) D2D communication. Henceforth, a "D2D-capable UE" is defined as a UE that has the capability to broadcast the availability (advertising) of a D2D link with another UE and which can act as a relay for traffic from/to at least one other UE. The other UE will be referred to where necessary for clarity, as a D2D-needing UE. Thus, UE 11 in Figure 1(b) is an example of a D2D-capable UE and UE 12 is a D2D-needing UE.

A UE may determine that it is a D2D-capable UE based on, for example, intrinsic capabilities of the UE as well as its current loading (data buffer status), battery level, and quality of its wireless link (channel) with the eNB. A measure such as Received Signal Strength Indication (RSSI) can be used by a UE to check that is objected to haws a sufficiently good channel to act as relay. A further criterion to decide availability for D2D, is whether or not the UE is already providing a D2D link to another UE (or given number of UEs), since it may be expected that there is a limit on the number of simultaneously D2D links which a UE can usefully maintain. The UE may review and confirm its availability periodically, and/or in response to a request from the eNB.

A UE may determine that it is a D2D-needing UE based on, for example the quality of its wireless link (channel) with the eNB. RSSI can be used by a UE to decide that it needs to form an alternative connection such as a D2D link, for example if the measured value of RSSI falls below a threshold. Other factors such as data throughput required to provide requested services to the UE, may also be taken into account.

It should be mentioned that the UEs may make these determinations autonomously without requiring any additional input or instruction from the base station, or any input of the end users. Indeed the users need not be aware at all that D2D links are being set up, except, it is to be hoped, in experiencing an improved quality of service (QoS). Embodiments additionally address what happens before the D2D mode is started, and in particular, how and when the UE starts listening to the broadcast of the proposed dedicated D2D preamble.

Features of the present Invention include:
- A handshaking procedure (describing protocol interactions) between a D2D-capable UE (the UE that will perform RACH) and another UE that can request or be ordered to provide a communication link using a D2D method. The handshaking procedure is performed using modifications of the conventional usage of LTE RACH preambles.
- Modifications to the conventional LTE RACH procedure to enable a D2D-capable UE to indicate its capability to other UEs, and to receive additional (control) information from the eNB. The modification requires changes in both UE and eNodeB behaviour.
- Changes to cell broadcast information to include a specific RACH preamble allocation for the purposes of D2D link advertising and establishment (thus saving terminal power for UEs looking for D2D gateways), and in some embodiments D2D opportunities in neighbouring cells.

It is assumed that UEs joining the network communicate to the network some information concerning their D2D capabilities, for example during initial access/connection. This information may include an explicit notification from a UE that the UE considers itself a D2D-capable UE. Alternatively the eNB may infer this fact for itself from other information normally included in reports from the UE. The network can be assumed to know details of all the connected UEs, their service sessions, buffer statuses and so forth.

Therefore, an eNodeB with which various UEs are in wireless communication will know which of the UEs are D2D-capable UEs in the sense noted above. Moreover, since by definition a D2D link implies communication directly between UEs, it is assumed that a D2D-needing UE can detect the proximity of one or more other UEs. Although a UE could do this by continually scanning for the presence of other UEs, to conserve battery power it is preferable to restrict the detection to a specific time period, as will be explained.

In all the embodiments to be described, the modifications are with respect to the conventional RACH procedure described above referring to Figure 3. The initial steps are basically the same in each embodiment.

In a first embodiment, the contention free-based RACH procedure is modified as follows. Steps 1-3 described below are illustrated in Figure 4.
1. The eNodeB assigns a dedicated preamble for the purpose of D2D communication and sends it to a D2D-capable UE. The preamble is specific to that D2D-capable UE (hence contention-free). The lifetime of this dedicated preamble is a variable parameter and some ways of modifying it (and even stopping the usage of a certain RACH preamble for this purpose) are detailed in subsequent embodiments.
2. The D2D-capable UE will then RACH with the assigned "D2D preamble" to advertise its D2D capability to any other UE within range of the preamble signal. A UE needing a D2D link will listen during the RACH period to identify the dedicated D2D preamble and to identify the D2D-capable UE; this is a change to the conventional RACH procedure.
   In a refinement of Step 2, the transmit power for the broadcast of the dedicated D2D preamble can vary and in particular it can be lower than what is normally needed to reach the eNB. Assuming however that it is necessary for eNB to listen to the dedicated D2D preamble, then either a higher transmission power would need to be applied, in which case the D2D-needing UEs would need to have some additional scaling of measured RSSI to ensure that distant UEs would not form links.
3. The eNodeB either (a) broadcasts a Random Access Response message (RAR) with no modification, which may assist a UE needing a D2D link to identify the D2D-capable UE; (b) broadcasts a conventional RAR including UL grant for the D2D-capable UE (see below); or (c) in some cases no RAR may be necessary.
4. The D2D-capable UE either, in case 3(a) ignores RAR as it is no longer expecting this RAR, which is a change to the existing behaviour; alternatively in the case of 3(b), as per conventional RACH the D2D-capable UE records the UL grant to use for its communication with the eNodeB.
   Even in case (a) above, the RAR can still be useful in various ways: to identify a timing alignment instruction to synchronize subsequent UL transmission for the D2D-needing UE; to identify an initial UL resource grant for transmission of a L2/L3 message (not shown) from the D2D-needing UE; or to assign a cell radio network temporary identifier C-RNTI to the D2D-needing UE. Thus, the D2D-needing UE may also receive the RAR. As will explained later, the RAR can also be used to provide information for optimisation purposes and to instruct the D2D-capable UE to stop broadcasting the dedicated preamble.
5. The D2D-needing UE which detected the D2D-capable UE in step 2, performs a handshaking procedure with the D2D-capable UE to establish the D2D link. Alternatively, if no D2D-needing UE replies to the preamble signal, the D2D-capable UE may repeat the process.

Other embodiments generally refine the first embodiment by varying individual steps of the procedure.

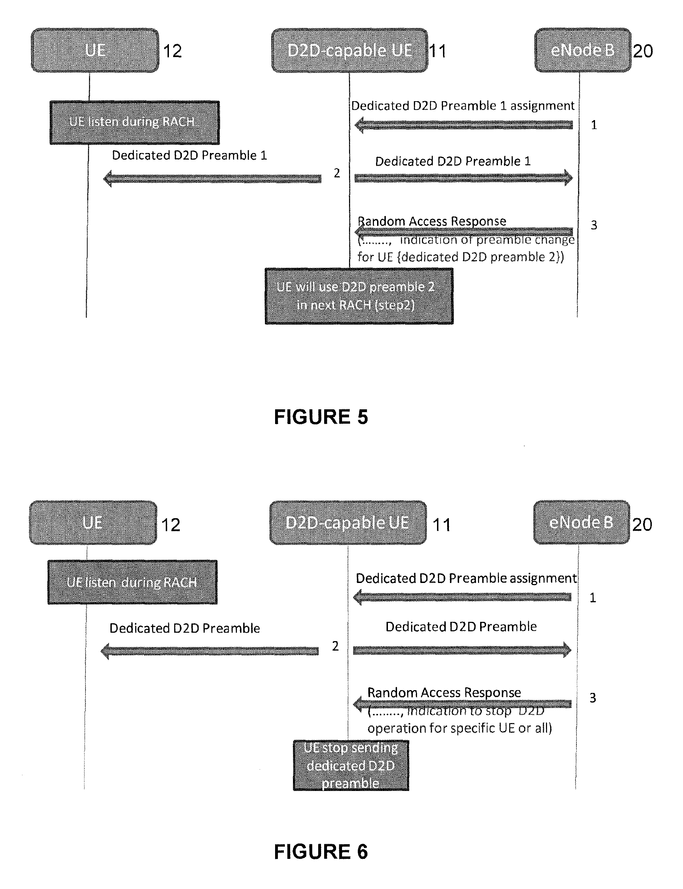

Steps 1-3 of a second embodiment are shown in Figure 5. Whilst in the first embodiment the D2D-capable UE only performs a single RACH, more generally the D2D-capable UE may transmit the preamble periodically, for example during an assigned RACH period within a frame or subframe of operation in the network. The timing for this may be contained in a broadcast message from the eNodeB to all UEs within its range.

In comparison with repeating the whole procedure of the first embodiment shown in Figure 4, the signalling is reduced because step 1 is not necessary for the subsequent RACH, so the advantage is reduced transmission of control signalling.

In the second embodiment, the contention free-based RACH procedure is modified as follows:
1. The eNodeB assigns a dedicated preamble for the purpose of D2D communication and sends it to the D2D-capable UE. If there are several D2D-capable UEs with which the eNB is in communication, it sends a separate dedicated D2D preamble to each one.
2. The D2D-capable UE RACHes with the assigned D2D preamble to advertise its D2D capability. A UE needing D2D link will listen during the RACH period to receive the dedicated D2D preamble and to identify the D2D-capable UE.
3. The eNodeB sends a Random Access Response message (RAR) with additional information, indicating if required a change of dedicated D2D preamble (D2D preamble 2) for use in next RACH. Thus, the D2D-capable UE will RACH next time with the new preamble (D2D preamble2).
4. Alternatively if a D2D-needing UE performs the handshaking procedure then a D2D link is established, which may have the effect of terminating subsequent RACHes by the D2D-capable UE.

In this way it is possible for the eNB to vary the preamble assigned to the D2D-capable UE without having to transmit again a specific message (step 1) for this purpose.
Varying the preamble may for example be used to signify additional information to the D2D-capable UE. For example, since the eNB is typically responsible for ensuring QoS, the eNB may signify that the D2D link is delay insensitive, high priority etc.

The D2D-capable UE may cease transmitting the assigned D2D preamble for any of various reasons, for example if it is no longer able to offer a D2D link owing to battery power or buffer status limitations, or due to having reached a limit number of existing D2D links.

In addition to a D2D-capable UE ceasing to send the D2D preamble for its own reasons (like power limitations), the eNB may wish to instruct the D2D-capable UE to do so. The eNB has an overall knowledge of the network performance and may take a decision to stop D2D mode altogether in order to lower power consumption by the UEs, and/or to free resources which otherwise would be dedicated to D2D communication. For example, where D2D is being used to extend coverage of the network, the eNB may decide to boost its transmission power instead to provide coverage directly via the cellular network, or improve the efficiency of resource usage.

Therefore, in a third embodiment of which steps 1-3 are shown in Figure 6, a stop signal is sent which is a new efficient (reduced signalling load) way to stop D2D mode for subsequent D2D communications. The contention free-based RACH procedure is modified as follows:
1. The eNodeB assigns dedicated preamble for the purpose of D2D communication and send it to D2D- capable UE.
2. A D2D-capable UE RACHes with the assigned D2D preamble to advertise its D2D capability. A D2D-needing UE will listen during RACH time to receive the dedicated D2D preamble and to identify the D2D-capable UE.
3. The eNodeB sends a Random Access Response message (RAR) with additional information, including an instruction to stop D2D operation for a specific UE or all UEs.
4. In response to the instruction, the UE stops RACHing with the dedicated D2D preamble.

Since a D2D-capable UE sending its preamble consumes battery power of the D2D-capable UE, it may be desirable to vary the frequency (periodicity) with which the D2D-capable UE RAChes (or in other words performs step 2 of any of the embodiments discussed here). This can reduce power consumption of the D2D capable UE at the expense of time for the discovery.

Therefore, in a fourth embodiment, the contention free-based RACH procedure is modified as follows:
1. The eNodeB assigns a dedicated preamble for the purpose of D2D communication and sends it to the D2D-capable UE.
2. The D2D-capable UE RACHes with the assigned D2D preamble to advertise its D2D capability. A UE needing D2D link will listen during RACH time to receive the dedicated D2D preamble and to identify the D2D-capable UE.
3. The eNodeB sends a Random Access Response message (RAR) with additional information indicating to change the frequency of preamble.
4. The D2D-capable UE changes the frequency of RACHing with dedicated D2D preamble; for example it RACHes only once every n RA periods instead of in every available period.

The first-to-fourth embodiments above have all been contention-free; however a fifth embodiment extends the principle of the invention to contention-based RACH.

Unlike the preceding embodiments, the fifth embodiment uses a specific bit (or more) of a preamble sequence to signify D2D capability. A pre-condition for the fifth embodiment is that the UEs already can recognise this "D2D capability bit" within a preamble assignment. For example the meaning of this bit (or sequence of bits) is written into the network specifications (so all UEs know about the meaning of this bit) for the UE behaviour. Setting of the D2D capability bit implies, in turn, that a subset of the possible preambles is set aside for use as D2D preambles in accordance with the invention.

In the fifth embodiment, a modified contention-based approach is used to enable D2D communication as follows:
Step 0: a UE needing a D2D link will listen during RACH period.
Step 1: a D2D capable UE selects and transmits a D2D preamble from the set of D2D preambles, with at least one bit indicating that the preamble is for a D2D link (subdivision of available preambles being performed and detailed in the MAC specification).

A UE needing D2D link will listen to preamble and identify it as a D2D preamble.
Step 2: the eNB transmits RAR (broadcast) as usual in response to the D2D preamble.
Step 3: the D2D capable UE (and other UEs with same preamble) transmits a L2/L3 message (which includes an identifier of the UE) to the eNB.

The D2D-needing UE will fully decode the L2/L3 message (unicast) to obtain the D2D capable UE ID. The D2D-needing UE therefore knows which among neighbouring UEs is the D2D-capable UE offering a D2D link.
Step 4: the eNB sends a contention resolution message (unicast) to the D2D capable UE (successful UE). Note that this message is preferably sent even if there is no actual contention to resolve, in order to terminate the RACH procedure for the D2D-capable UE. If there is contention, terminating RACH confirms the D2D-capable UE which has succeeded in the contention. This D2D-capable UE may relay the message to another UE as a broadcast message, to reach a UE which is out of the coverage area of the eNB.

UE needing D2D link decodes the contention message with the D2D capable UE it obtained from step 3 and follows the handshake procedure with the D2D capable UE.

The handshake procedure uses a contention free based method where the UE sends the same dedicated preamble to the D2D capable UE. That is, a UE needing D2D link sends the same D2D preamble to the D2D capable UE.

The assumption for the above embodiments that D2D capable UEs and UEs requesting to participate in the D2D link are within the coverage area of one single eNodeB. In this scenario, before starting the D2D mode, a UE whether it is in RRC connected or idle state would listen to the dedicated preamble broadcast by the D2D-capable UE in the RACH period, obtained previously from broadcast system information.

According to a sixth embodiment described below, broadcast system information is modified to enable a D2D link between UEs belonging to the same or different eNodeB, with UEs requesting a D2D link when the UE is either in RRC connected or idle state. This modification addresses the following question: how and when the UE starts to listen for the dedicated D2D preamble which is being broadcast by the D2D-capable UE.

Different scenarios are considered, including, but not restricted to, the following:
(i) D2D-capable UE and D2D-needing UE in the coverage area with the same eNodeB:-
   UE in RRC connected state
   UE in RRC Idle state

   The reason for distinguishing between these two scenarios is that a UE in RRC-connected mode does not have to listen to the system information to know about the RACH period (previously obtained through the system information), but a UE in Idle mode does have to.
(ii) UE is in adjacent coverage area of another eNodeB, outside of the coverage area of the eNB serving the D2D-capable UE:-
   UE in RRC connected state
   UE in RRC Idle state

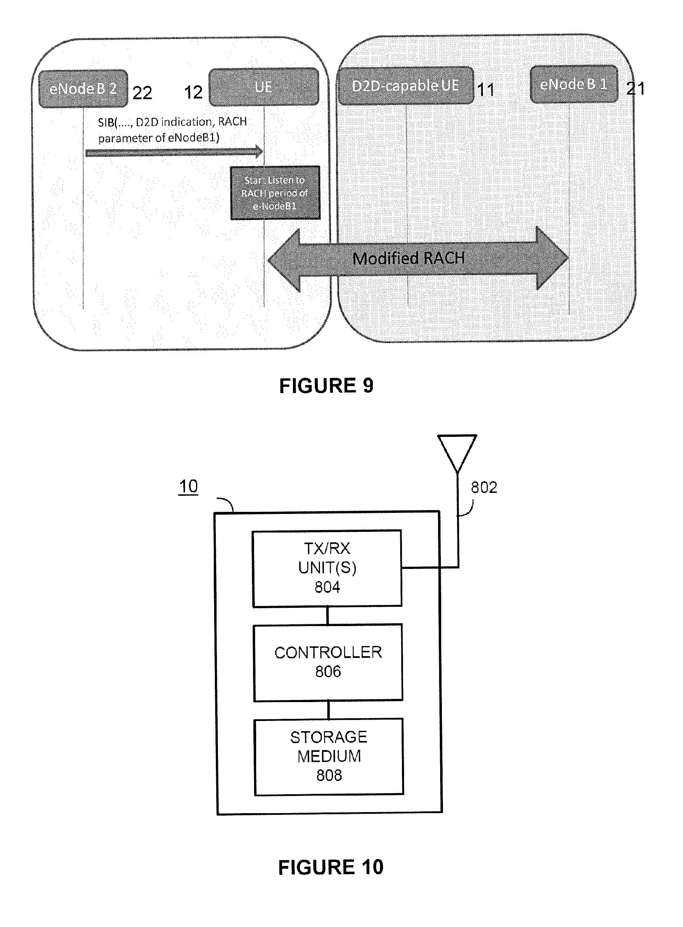

The sixth embodiment, depicted in Figure 9, addresses the scenario where the D2D-needing UE is outside the coverage area of the first eNodeB (eNB1) serving a D2D-capable UE, but at the edge of the coverage area of the second eNodeB (eNB2). In this embodiment it is assumed that the two eNBs have some synchronisation. The main synchronization information of interest is the RACH period of eNB1, so that the D2D-needing UE can receive this information via eNB2. Thus, in this embodiment the D2D-needing UE will receive the broadcast system information of its cell (eNB2) with the following novel information: 1) an indication of D2D opportunities with other UEs (from different cell, eNB1), and 2) RACH parameters of the first cell (eNB1) to indicate listening period for the D2D link. In this way it is possible for the D2D-needing UE to establish a D2D link with the D2D-capable UE in a different cell. Here, the synchronization information and/or indication of D2D opportunities can include timing and/or frequency information, particularly where different time periods or frequency resources are reserved by the respective eNBs for D2D communication.

In this scenario it may also be beneficial for the eNBs to exchange information on D2D links in their respective coverage areas, for resource optimisation or interference mitigation.

Figure 10 is a block diagram illustrating an example of a terminal 10 to which the present invention may be applied. The terminal 10 may include any type of device which may be used in a wireless communication system described above and may include cellular (or cell) phones (including smartphones), personal digital assistants (PDAs) with mobile communication capabilities, laptops or computer systems with mobile communication components, and/or any device that is operable to communicate wirelessly. The terminal 10 include transmitter/receiver unit(s) 804 connected to at least one antenna 802 (together defining a communication unit) and a controller 806 having access to memory in the form of a storage medium 808. The controller may be, for example, microprocessor, digital signal processor (DSP), ASIC, FPGA, or other logic circuitry programmed or otherwise configured to perform the various functions described above, such as controlling the communication unit to transmit a SRS signal. For example, the various functions described above may be embodied in the form of a computer program stored in the storage medium 808 and executed by the controller 804. The controller 806 is arranged to determine that the terminal 10 is a D2D-capable terminal (D2D-capable UE) as discussed previously. The transmission/reception unit 804 is arranged, under control of the controller 806, to broadcast the D2D preamble, receive the RAR and so forth as discussed previously.

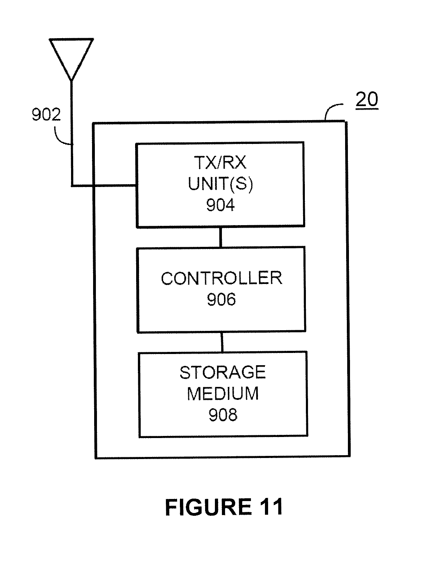

Figure 11 is a block diagram illustrating an example of a base station 20 to which the present invention may be applied. The base station includes transmitter/receiver unit(s) 904 connected to at least one antenna 902 (together defining a communication unit) and a controller 906. The controller may be, for example, microprocessor, digital signal processor (DSP), ASIC, FPGA, or other logic circuitry programmed or otherwise configured to perform the various functions described above, such as changing an operating parameter of the base station 20. For example, the various functions described above may be embodied in the form of a computer program stored in the storage medium 908 and executed by the controller 906. Thus, for example the controller 906 is responsible for assigning the D2D preamble in the first to fourth embodiments discussed previously, constructing the RAR, etc. The transmission/reception unit 904 is responsible for notifying the assigned D2D preamble to the D2D-capable UE, receiving the preamble transmitted from the D2D-capable UE, transmitting the RAR, and so on under control of the controller 906.

The embodiments may be combined as appropriate: for example the sixth embodiment can be used in conjunction with any of the preceding embodiments. Various modifications are possible within the scope of the present invention.

The order of steps in any method of the invention is not necessarily essential. For example, it is assumed in the first to fourth embodiments that a D2D-capable UE is identified prior to the eNB assigning the dedicated preamble for D2D. Although that is the preferred sequence of events, a less preferable alternative (given sufficient availability of preambles) would be to assign to each UE a dedicated D2D preamble regardless of the UE's current suitability to provide a D2D link.

As already mentioned, a "D2D link" may include any of a data path, control path, or both and may be defined for both UL and DL or for either one of the UL and DL. The D2D link can replace a direct link with the eNB, or may supplement a direct link to improve the data rate of an existing service, add a new service, and/or provide redundancy. As an example, a D2D link may be used as a supplementary DL data path to enhance the data rate achievable to the D2D-needing UE to improve QoS of a data-intensive service such as video streaming.

To distinguish between such different kinds of D2D link, a D2D-capable UE could use a first preamble to signify availability of a DL data link, another preamble for a UL data link, and so forth. Alternatively, in the fifth embodiment in which at least one "D2D capability bit" is employed as part of a preamble sequence, using multiple bits would likewise allow acceptance of DL, or UL, traffic or both.

Whilst D2D is normally understood (at least within 3GPP) to involve sharing of the licensed spectrum available to the cellular network, and use of the same RAT, this is not essential. It is possible for D2D to make use of other spectrum and/or other RATs so long as the base station is able to maintain some overall control by means of its RRC connections with the UEs. Examples of such other RATs would include Wi-Fi (IEEE802.11) and Bluetooth (IEEE802.15).

As noted earlier, it is not necessarily the case that the D2D-capable UE will relay traffic to and from an eNB. For certain applications, such as mobile gaming or file sharing, it may be sufficient for the D2D-capable UE and D2D-needing UE to communicate without a data path to the cellular network. The eNB should nevertheless be involved on the control path to coordinate and supervise the D2D links within its coverage area.

Although it was assumed above that the D2D-capable UE has a direct wireless link with the eNB, this is not necessarily the case and in principle the D2D-capable UE could itself be using a D2D link with another D2D-capable UE, either exclusively (so that the communication link with the eNB is indirect) or supplementally to a direct cellular wireless link.

As already mentioned, in some embodiments of the present invention the eNodeB assigns a dedicated preamble for the purpose of D2D communication and sends it to a D2D-capable UE. This does not necessarily mean, however, that the eNB must assign a preamble for every available D2D-capable UE. The eNB may have reasons for restricting usage of D2D in its coverage area, for example to avoid or mitigate interference with normal wireless communication in the cellular network. Likewise, in the fifth embodiment, the eNB may place restrictions on usage of the special D2D preambles including the capability bit.

Incidentally, usage of the "capability bit" in the fifth embodiment is convenient since the principle is similar to the way in which a UE can conventionally indicate the required size of its UL grant (L2/L3 message). However, this is only an example and there are various alternative ways of indicating preambles as "D2D-capable" preambles. For example a subset of the available preambles could be reserved in the system specifications as being for D2D usage.

In the described embodiments, the D2D-capable UE determines for itself its availability for D2D communication. However, this is not essential and a UE could be informed by the base station that the base station would like the UE to offer a D2D link.

The same D2D-capable UE may provide D2D links to more than one D2D-needing UE simultaneously. Conversely, the same D2D-needing UE could establish a D2D link with more than one D2D-capable UE simultaneously.

Whilst reference has been made above to "UEs" having "users", the present invention is equally applicable to so-called Machine-to-Machine (M2M) communication in which the terminals are machines.

To summarise, embodiments of the present invention can provide a novel mechanism for setting up a Device-to-Device (D2D) link using a modified Random Access (RACH) procedure. The conventional RACH procedure is modified to enable a D2D-capable UE to indicate its capability to other UEs, to receive additional (control) information, and to enable the handshake procedure used to establish a D2D link. Additionally, embodiments modify the broadcast system information, to enable D2D links between UEs in the same or different coverage areas, taking into consideration the RRC UE states (RRC_Connected or RRC_Idle). The proposed modifications to the broadcast system information include: 1) an indication of D2D link opportunities with other UEs under different coverage area to that of the D2D capable UE, and 2) RACH parameters in the coverage area of the D2D capable UE, to indicate the listening period for the D2D link. Specification changes for both UE and eNodeB behaviours are envisaged to adapt to the proposed RACH behaviours.

### Industrial Applicability

Embodiments of the present invention can provide an enhanced RACH procedure that will result in lower control signalling overhead for the required procedure that can enable a D2D communication link between UEs in a wireless communication network. Additionally the invention enables an efficient establishment of a D2D link between devices in the same or different coverage areas through the modification of broadcast system information.

## Claims

1. A method of forming a device-to-device, D2D, wireless communication link between first (11) and second (12) terminals in a network wherein a base station (20) is in wireless communication with at least the first terminal (11), the method **characterised by** comprising:
the first terminal (11) determining itself as a D2D-capable terminal which can provide a D2D link with another terminal;
the first terminal (11) broadcasting, during a random access period set by the base station (20), a random access preamble to advertise its D2D capability;
the base station (20) transmitting, in response to reception of the random access preamble from the first terminal (11), a random access response including information to assist in establishing the D2D link; and
the second terminal (12) detecting the random access preamble and establishing the D2D link with the first terminal (11).

2. The method according to claim 1 wherein the first terminal (11) has a direct wireless link with the base station (20).

3. The method according to claim 1 or 2 wherein the information included in the random access response includes at least one of:
a random access preamble for future broadcasting by the first terminal (11);
an instruction regarding future broadcasting of the random access preamble by the first terminal (11);
timing information for a transmission from the second terminal (12); and
resource allocation for a transmission from the second terminal (12).

4. The method according to any preceding claim wherein the first terminal (11) repeats the broadcasting during at least one later random access period.

5. The method according to claim 4 wherein the base station (20) further instructs the first terminal (11) to stop broadcasting the random access preamble.

6. The method according to claim 4 wherein the base station (20) informs the first terminal (11) of a periodicity for broadcasting the random access preamble.

7. The method according to any preceding claim wherein the broadcasting is performed with a transmission power lower than needed for wireless communication from the first terminal (11) to the base station (20).

8. The method according to any preceding claim further comprising, prior to the broadcasting, the base station (20) notifying the first terminal (11) of a dedicated random access preamble for the purpose of D2D.

9. The method according to any of claims 1 to 7 further comprising:
predefining a set of preambles as being D2D preambles;
the broadcasting comprising the first terminal (11) selecting one of the D2D preambles;
the base station (20) responding to the broadcasting with a random access response;
the first terminal (11) transmitting a signal identifying the first terminal;
the second terminal (12) decoding the signal to identify the first terminal, and sending the selected one of the D2D preambles back to the first terminal.

10. The method according to claim 9 wherein the D2D preambles include at least one bit identifying the preambles as reserved for use in D2D communication.

11. The method according to any preceding claim wherein the base station (20) is in wireless communication with the first terminal (11) and the second terminal (12) is in wireless communication with a second base station (21), the first base station (20) providing the second base station (21) with information including the random access period, and the second base station (21) broadcasting information provided by the first base station (20).

12. The method according to any preceding claim wherein the determining is performed autonomously by the first terminal (11).

13. A wireless communication system comprising at least one base station (20) and first (11) and second (12) terminals, at least the first terminal (11) being in wireless communication with the base station (20), wherein:
the base station includes a controller (906) arranged to set a random access period and a transmitter (904) arranged to broadcast the random access period; and **characterised in that**
the first terminal (11) includes a controller (806) arranged to determine that the terminal is a D2D-capable terminal which can provide a device-to-device, D2D link with another terminal, and a transmitter (804) arranged to broadcast, during the random access period set by the base station (20), a random access preamble to advertise its D2D capability; and
the second terminal (12) includes a receiver (804) arranged to detect the random access preamble and a controller (806) responsive to detection of the random access preamble to establish the D2D link with the first terminal (11); wherein
the base station (20) is further arranged, in response to receiving the random access preamble from the first terminal (11), to transmit from the transmitter (804) a random access response including information to assist in establishing the D2D link.

14. A terminal (11) for use in a wireless communication system comprising the terminal, at least one base station (20) in wireless communication with the terminal, and at least one other terminal (12), **characterised in that** the terminal (11) comprises:
a controller (806) arranged to determine that the terminal (11) is a D2D-capable terminal which can provide a device-to-device, D2D link with another terminal, and a transmitter (804) arranged to broadcast, during a random access period set by the base station (20), a random access preamble to advertise its D2D capability to the at least one other terminal (12).

15. A base station (20) for use in a wireless communication system comprising the base station (20), a first terminal (11) in wireless communication with the base station and capable of device-to-device, D2D, communication, and a second terminal (12), the base station (20) comprising a controller (906) arranged to set a random access period, a transmitter (904) arranged to broadcast the random access period, and a receiver (904); and **characterised in that**:
the controller (906) is arranged to set a random access period for the purpose of allowing the first terminal (11) to advertise its D2D capability by transmission by the first terminal of a D2D preamble;
the transmitter (904) is arranged to broadcast the random access period and optionally, to notify a dedicated D2D preamble to the first terminal (11); and
the receiver (904) is arranged to receive the D2D preamble transmitted from the first terminal (11); and
the controller (906) is responsive to the receiver (904) receiving the D2D preamble to cause the transmitter (904) to transmit further information to assist in establishing a D2D link between the first terminal (11) and the second terminal (12).

## Patentansprüche

1. Verfahren zum Bilden einer Gerät-zu-Gerät, D2D, Drahtloskommunikationsverbindung zwischen einem ersten (11) und einem zweiten (12) Endgerät in einem Netzwerk, wobei eine Basisstation (20) in Drahtloskommunikation mit wenigstens dem ersten Endgerät (11) ist, wobei das Verfahren **gekennzeichnet ist durch**:
das erste Endgerät (11) bestimmt sich selbst als ein D2D-fähiges Endgerät, das eine D2D-Verbindung mit einem anderen Endgerät bereitstellen kann;
das erste Endgerät (11) sendet, während einer von der Basisstation (20) eingestellten Direktzugriffsperiode, eine Direktzugriffspräambel aus, um seine D2D-Fähigkeit anzuzeigen;
die Basisstation (20) sendet, als Antwort auf einen Empfang der Direktzugriffspräambel von dem ersten Endgerät (11), eine direkt Zugriffsantwort, die Information enthält, um beim Aufbauen der D2D-Verbindung zu assistieren; und
das zweite Endgerät (12) erfasst die Direktzugriffspräambel und baut die D2D-Verbindung mit dem ersten Endgerät (11) auf.

2. Verfahren nach Anspruch 1, wobei das erste Endgerät (11) eine direkte Drahtlosverbindung mit der Basisstation (20) aufweist.

3. Verfahren nach Anspruch 1 oder 2, wobei die in der Direktzugriffsantwort enthaltene Information wenigstens eines enthält von:
einer Direktzugriffspräambel für ein zukünftiges Aussenden von dem ersten Endgerät (11);
einen Befehl betreffend ein zukünftiges Aussenden der Direktzugriffspräambel von dem ersten Endgerät (11);
Zeitsteuerungsinformation für eine Sendung von dem zweiten Endgerät (12); und
eine Ressourcenzuweisung für eine Sendung von dem zweiten Endgerät (12).

4. Verfahren nach einem vorhergehenden Anspruch, wobei das erste Endgerät (11) das Aussenden während wenigstens einer späteren Direktzugriffsperiode wiederholt.

5. Verfahren nach Anspruch 4, wobei die Basisstation (20) dem ersten Endgerät (11) weiterhin befiehlt, ein Aussenden der Direktzugriffspräambel zu stoppen.

6. Verfahren nach Anspruch 4, wobei die Basisstation (20) das erste Endgerät (11) über eine Periodizität zum Aussenden der Direktzugriffspräambel informiert.

7. Verfahren nach einem vorhergehenden Anspruch, wobei das Aussenden durchgeführt wird mit einer Sendeleistung niedriger als für eine Drahtloskommunikation von dem ersten Endgerät (11) zu der Basisstation (20) benötigt.

8. Verfahren nach einem vorhergehenden Anspruch, weiterhin umfassend, vor dem Aussenden, die Basisstation (20) meldet dem ersten Endgerät (11) eine dedizierte Direktzugriffspräambel zum Zweck einer D2D.

9. Verfahren nach einem der Ansprüche 1-7, weiterhin umfassend:
Vordefinieren eines Satzes von Präambeln als D2D-Präambeln;
das Aussenden umfasst, dass das erste Endgerät (11) eine der D2D-Präambeln auswählt;
die Basisstation (20) antwortet auf das Aussenden mit einer Direktzugriffsantwort;
das erste Endgerät (11) sendet ein das erste Endgerät identifizierendes Signal;
das zweite Endgerät (12) decodiert das Signal, um das erste Endgerät zu identifizieren, und sendet die Ausgewählte der D2D-Präambeln zurück an das erste Endgerät.

10. Verfahren nach Anspruch 9, wobei die D2D-Präambeln wenigstens ein Bit enthalten, dass die Präambeln als zur Verwendung in einer D2D-Kommunikation reserviert identifizieren.

11. Verfahren nach einem vorhergehenden Anspruch, wobei die Basisstation (20) in Drahtloskommunikation mit dem ersten Endgerät (11) ist und das zweite Endgerät (12) in Drahtloskommunikation mit einer zweiten Basisstation (21) ist, die erste Basisstation (20) der zweiten Basisstation (21) die Direktzugriffperiode enthaltende Information bereitstellt und die zweite Basisstation (21) von der ersten Basisstation (20) bereitgestellte Information aussendet.

12. Verfahren nach einem vorhergehenden Anspruch, wobei das Bestimmen autonom von dem ersten Endgerät (11) durchgeführt wird.

13. Drahtloskommunikationssystems, das wenigstens eine Basisstation (20) und ein erstes (11) und ein zweites (12) Endgerät umfasst, wobei wenigstens das erste Endgerät (11) in Drahtloskommunikation mit der Basisstation (20) ist, wobei:
die Basisstation eine Steuerung (906), die eingerichtet ist zum Einstellen einer Direktzugriffsperiode, und einen Sender (904), der eingerichtet ist zum Aussenden der Direktzugriffsperiode, enthält; und **dadurch gekennzeichnet ist, dass**
das erste Endgerät (11) eine Steuerung (806), die eingerichtet ist zum Bestimmen, dass das Endgerät ein D2D-fähiges Endgerät ist, das eine Gerät-zu-Gerät, D2D-Verbindung mit einem anderen Endgerät bereitstellen kann, und einen Sender (804), der eingerichtet ist zum Aussenden, während einer durch die Basisstation (20) eingestellten Direktzugriffsperiode, einer Direktzugriffspräambel, um seine D2D-Fähigkeit anzuzeigen, enthält; und
das zweite Endgerät (12) einen Empfänger (804), der eingerichtet ist zum Erfassen der Direktzugriffspräambel, und eine Steuerung (806), als Antwort auf eine Erfassung der Direktzugriffspräambel, zum Aufbauen der D2D-Verbindung mit dem ersten Endgerät (11), enthält; wobei
die Basisstation (20) weiterhin eingerichtet ist, als Antwort auf ein Empfangen der Direktzugriffspräambel von dem ersten Endgerät (11), von dem Sender (804), eine Direktzugriffsantwort zu senden, die Information enthält, um beim Aufbauen der D2D-Verbindung zu assistieren.

14. Endgerät (11) zur Verwendung in einem Drahtloskommunikationssystem, das das Endgerät, wenigstens eine Basisstation (20) in Drahtloskommunikation mit dem Endgerät und wenigstens ein anderes Endgerät (12) umfasst, **dadurch gekennzeichnet, dass** das Endgerät (11) umfasst:
eine Steuerung (806), die eingerichtet ist zum Bestimmen, dass das Endgerät (11) ein D2D-fähiges Endgerät ist, das eine Gerät-zu-Gerät, D2D-Verbindung mit einem anderen Endgerät bereitstellen kann, und einen Sender (804), der eingerichtet ist zum Aussenden, während einer durch die Basisstation (20) eingestellten Direktzugriffsperiode, einer Direktzugriffspräambel, um seine D2D-Fähigkeit anzuzeigen, an das wenigstens eine andere Endgerät (12).

15. Basisstation (20) zur Verwendung in einem Drahtloskommunikationssystem, das die Basisstation (20) ein erstes Endgerät (11) in Drahtloskommunikation mit der Basisstation und fähig zu einer Gerät-zu-Gerät, D2D, Kommunikation, und ein zweites Endgerät (12) umfasst, wobei die Basisstation (20) eine Steuerung (906), die eingerichtet ist zum Einstellen einer Direktzugriffsperiode, einen Sender (904), der eingerichtet ist zum Aussenden der Direktzugriffsperiode, und einen Empfänger (904) umfasst; und **dadurch gekennzeichnet ist, dass**:
die Steuerung (906) eingerichtet ist zum Einstellen einer Direktzugriffsperiode, um es dem ersten Endgerät (11) zu erlauben, seine D2D-Fähigkeit anzuzeigen, durch Sendung, von dem ersten Endgerät, einer D2D-Präambel;
der Sender (904) eingerichtet ist zum Aussenden der Direktzugriffsperiode und optional zum Melden einer dedizierten D2D-Präambel an das erste Endgerät (11); und der Empfänger (904) eingerichtet ist zum Empfangen der von dem ersten Endgerät (11) gesendeten D2D-Präambel; und
die Steuerung (906), als Antwort darauf, dass der Empfänger (904) die D2D-Präambel empfängt, den Sender (904) veranlasst, weitere Information zu senden, um beim Aufbauen einer D2D-Verbindung zwischen dem ersten Endgerät (11) und dem zweiten Endgerät (12) zu assistieren.

## Revendications

1. Procédé de formation d'une liaison de communication sans fil de dispositif à dispositif, D2D, entre des premier (11) et deuxième (12) terminaux dans un réseau dans lequel une station de base (20) est en communication sans fil au moins avec le premier terminal (11), le procédé étant **caractérisé en ce qu'**il comprend :
la détermination, par le premier terminal (11) lui-même, qu'il est un terminal compatible D2D qui peut établir une liaison D2D avec un autre terminal ;
la diffusion, par le premier terminal (11), pendant une période d'accès aléatoire définie par la station de base (20), d'un préambule d'accès aléatoire pour faire connaître sa capacité D2D ;
l'émission, par la station de base (20), en réponse à la réception du préambule d'accès aléatoire du premier terminal (11), d'une réponse d'accès aléatoire comprenant des informations pour faciliter l'établissement de la liaison D2D ; et
la détection, par le deuxième terminal (12), du préambule d'accès aléatoire et l'établissement par celui-ci de la liaison D2D avec le premier terminal (11).

2. Procédé selon la revendication 1, dans lequel le premier terminal (11) a une liaison sans fil directe avec la station de base (20).

3. Procédé selon la revendication 1 ou 2, dans lequel les informations incluses dans la réponse d'accès aléatoire comprennent au moins l'un :
d'un préambule d'accès aléatoire pour une diffusion future par le premier terminal (11) ;
d'une instruction concernant une diffusion future du préambule d'accès aléatoire par le premier terminal (11) ;
d'informations de synchronisation pour une émission à partir du deuxième terminal (12) ; et
d'une attribution de ressources pour une émission à partir du deuxième terminal (12).

4. Procédé selon l'une quelconque des revendications précédentes, dans lequel le premier terminal (11) répète la diffusion pendant au moins une période d'accès aléatoire ultérieure.

5. Procédé selon la revendication 4, dans lequel la station de base (20) ordonne en outre au premier terminal (11) d'arrêter la diffusion du préambule d'accès aléatoire.

6. Procédé selon la revendication 4, dans lequel la station de base (20) informe le premier terminal (11) d'une périodicité pour diffuser le préambule d'accès aléatoire.

7. Procédé selon l'une quelconque des revendications précédentes, dans lequel la diffusion est effectuée avec une puissance d'émission inférieure à celle nécessaire pour une communication sans fil du premier terminal (11) vers la station de base (20).

8. Procédé selon l'une quelconque des revendications précédentes, comprenant en outre, avant la diffusion, la notification, par la station de base (20), au premier terminal (11) d'un préambule d'accès aléatoire dédié à des fins de D2D.

9. Procédé selon l'une quelconque des revendications 1 à 7, comprenant en outre :
la définition au préalable d'un ensemble de préambules en tant que préambules D2D ;
la diffusion comprenant la sélection, par le premier terminal (11), de l'un des préambules D2D ;
la réponse de la station de base (20) à la diffusion par une réponse d'accès aléatoire ;
l'émission, par le premier terminal (11), d'un signal identifiant le premier terminal ;
le décodage, par le deuxième terminal (12), du signal pour identifier le premier terminal, et le renvoi par celui-ci de l'un sélectionné des préambules D2D au premier terminal.

10. Procédé selon la revendication 9, dans lequel les préambules D2D comprennent au moins un bit identifiant les préambules comme étant réservés pour une utilisation dans une communication D2D.

11. Procédé selon l'une quelconque des revendications précédentes, dans lequel la station de base (20) est en communication sans fil avec le premier terminal (11) et le deuxième terminal (12) est en communication sans fil avec une deuxième station de base (21), la première station de base (20) fournissant à la deuxième station de base (21) des informations comprenant la période d'accès aléatoire, et la deuxième station de base (21) diffusant les informations fournies par la première station de base (20).

12. Procédé selon l'une quelconque des revendications précédentes, dans lequel la détermination est effectuée de manière autonome par le premier terminal (11).

13. Système de communication sans fil comprenant au moins une station de base (20) et des premier (11) et deuxième (12) terminaux, au moins le premier terminal (11) étant en communication sans fil avec la station de base (20), dans lequel :
la station de base comprend un contrôleur (906) agencé pour définir une période d'accès aléatoire et un émetteur (904) agencé pour diffuser la période d'accès aléatoire ; et **caractérisé en ce que**
le premier terminal (11) comprend un contrôleur (806) agencé pour déterminer que le terminal est un terminal compatible D2D qui peut établir une liaison D2D, dispositif à dispositif, avec un autre terminal, et un émetteur (804) agencé pour diffuser, pendant la période d'accès aléatoire définie par la station de base (20), un préambule d'accès aléatoire pour faire connaître sa capacité D2D ; et
le deuxième terminal (12) comprend un récepteur (804) agencé pour détecter le préambule d'accès aléatoire et un contrôleur (806) sensible à la détection du préambule d'accès aléatoire pour établir la liaison D2D avec le premier terminal (11) ; dans lequel
la station de base (20) est en outre agencée pour, en réponse à la réception du préambule d'accès aléatoire du premier terminal (11), émettre par l'émetteur (804) une réponse d'accès aléatoire comprenant des informations pour faciliter l'établissement de la liaison D2D.

14. Terminal (11) pour une utilisation dans un système de communication sans fil comprenant le terminal, au moins une station de base (20) en communication sans fil avec le terminal, et au moins un autre terminal (12), **caractérisé en ce que** le terminal (11) comprend :
un contrôleur (806) agencé pour déterminer que le terminal (11) est un terminal compatible D2D qui peut établir une liaison D2D, dispositif à dispositif, avec un autre terminal, et un émetteur (804) agencé pour diffuser, pendant une période d'accès aléatoire définie par la station de base (20), un préambule d'accès aléatoire pour faire connaître sa capacité D2D au dit au moins un autre terminal (12).

15. Station de base (20) pour une utilisation dans un système de communication sans fil comprenant la station de base (20), un premier terminal (11) en communication sans fil avec la station de base et capable d'une communication D2D, dispositif à dispositif, et un deuxième terminal (12), la station de base (20) comprenant un contrôleur (906) agencé pour définir une période d'accès aléatoire, un émetteur (904) agencé pour diffuser la période d'accès aléatoire, et un récepteur (904) ; et **caractérisée en ce que** :
le contrôleur (906) est agencé pour définir une période d'accès aléatoire afin de permettre au premier terminal (11) de faire connaître sa capacité D2D par l'émission par le premier terminal d'un préambule D2D ;
l'émetteur (904) est agencé pour diffuser la période d'accès aléatoire et, en option, pour notifier au premier terminal (11) un préambule D2D dédié ; et
le récepteur (904) est agencé pour recevoir le préambule D2D émis par le premier terminal (11) ; et
le contrôleur (906) réagit à la réception par le récepteur (904) du préambule D2D pour amener l'émetteur (904) à émettre des informations supplémentaires pour faciliter l'établissement d'une liaison D2D entre le premier terminal (11) et le deuxième terminal (12).
